# FASCICULE DE BREVET EUROPEEN

(11) **EP 1 884 854 B1**
(45) Date de publication et mention de la délivrance du brevet: **27.04.2011**
(21) Numéro de dépôt: 07290937.7
(22) Date de dépôt: 25.07.2007
(51) Int. Cl.: G05D 23/19

(54) **Dispositif de chauffage de locaux**
Vorrichtung zum Beheizen von Räumen
Device for heating premises

(30) Priorité: 26.07.2006 FR 0606859
(43) Date de publication de la demande: 06.02.2008
(73) Titulaire: Thermor Pacific, 45140 Saint Jean de la Ruelle (FR)
(72) Inventeur: Potapenko, Tetyana, 45400 Fleury les Aubrais (FR); Bony, Yves, 85170 Dompierre sur Yon (FR)
(74) Mandataire: Laget, Jean-Loup

(56) Documents cités:
- EP-A2- 0 802 472
- GB-A- 2 192 080
- JP-A- 60 186 630
- US-A- 4 223 831
- US-A- 5 100 053
- US-A- 5 637 040

## Description

L'invention est relative à un dispositif de chauffage de locaux, en particulier au moyen d'appareils de chauffage électrique.

On connaît de nombreux dispositifs programmables de régulation de température destinés à économiser l'énergie électrique dans les locaux inoccupés.

Ces dispositifs exigent cependant une programmation préalable du dispositif de régulation par l'utilisateur. Le changement fréquent de locaux, et le mode « nomade » d'occupation des locaux qui en résulte, contraignent l'utilisateur à changer fréquemment la programmation du dispositif de régulation, en fonction de circonstances imprévues ou de changements d'occupation.

Un inconvénient du dispositif de programmation connu résulte de ce qu'il nécessite une mise à jour et un suivi régulier de la programmation, pour lesquels l'utilisateur n'a pas toujours le temps nécessaire.

L'absence de suivi et de mise à jour de la régulation entraîne ainsi des situations d'inconfort, des dépenses importantes d'énergie et des coûts économiques indésirables.

Un premier but de l'invention est de proposer un nouveau dispositif de chauffage de locaux tenant compte de la présence effective de personnes à l'intérieur des locaux, pour adapter en conséquence le mode de chauffage électrique correspondant.

Le document FR 2 877 111 A3 décrit un émetteur de chaleur avec un dispositif de régulation de température qui comprend un thermostat, et aussi un détecteur de présence et un micro processeur, en vue de réguler l'énergie calorifique procurée par l'émetteur de chaleur, en fonction de la température d'une enceinte dans laquelle il est situé, et en fonction de la présence ou de l'absence de personnes dans cette enceinte.

Le détecteur de présence envisagé dans le document FR 2 877 111 A3 est un détecteur de présence infrarouge passif ayant pour objectif de prendre en compte la présence ou l'absence de personnes dans l'enceinte. Lorsque le détecteur indique une absence de personnes dans l'enceinte, la régulation comporte la possibilité de diminuer progressivement la température de l'enceinte pour passer d'une valeur de température de confort à une valeur réduite de température. Lorsque le détecteur du document FR 2 877 111 A3 indique l'absence de personnes dans l'enceinte, en même temps qu'une diminution brutale de température résultant par exemple de l'ouverture d'une fenêtre par temps froid est détectée, la régulation comporte la possibilité d'arrêter l'émetteur de chaleur.

Un deuxième but de l'invention est de proposer un nouveau dispositif de chauffage électrique, dans lequel la présence effective de personnes dans un local est détectée de manière améliorée, pour éviter la mise en oeuvre d'un mode de régulation inadapté.

Les documents JP 60 186630, US 4 223 831, US 5 100 053 et EP 0802472A2 décrivent des dispositifs de l'art antérieur.

Les documents GB 2 192 080, US 5 637 040 décrivent des dispositifs selon le préambule de la revendication 1 principale.

L'invention a pour objet un dispositif de chauffage de locaux tenant compte de la présence effective de personnes à l'intérieur des locaux pour adapter le mode de chauffage électrique, comportant au moins deux capteurs ou détecteurs de paramètres physiques, en vue de détecter, par coordination des signaux des au moins deux détecteurs ou capteurs de paramètres physiques, la présence effective d'une personne à l'intérieur d'un local à chauffer, pour adapter le mode de chauffage électrique, par exemple au mode de confort ou au mode économique, caractérisé par le fait que les capteurs ou détecteurs de paramètres physiques comportent au moins une combinaison d'un capteur ou détecteur de variation de mouvement et d'un capteur ou détecteur de luminosité et par le fait que le dispositif fonctionne selon une logique séparée en deux : une logique de détection de présence humaine associant, aux signaux des différents capteurs, un message : présence ou absence et une logique de chauffage adaptant le mode de chauffage (mode de fonctionnement économique, mode de confort), d'une part, au message reçu : présence ou absence , et d'autre part, au système de programmation et au temps écoulé depuis la dernière détection de présence.

Selon d'autres caractéristiques alternatives de l'invention :
- les capteurs ou détecteurs de paramètres physiques peuvent être choisis dans l'ensemble comportant: un capteur ou détecteur de luminosité, un capteur ou détecteur de variation de mouvements, un capteur ou détecteur de présence absolue à balayage laser ; un capteur ou détecteur de présence absolue à matrice infrarouge, un capteur à hyperfréquence qui permet de déceler le déplacement d'un objet dans sa zone de surveillance, un capteur ou détecteur à ultrasons, un capteur ou détecteur périvolumétrique qui détecte le changement de pression, un capteur ou détecteur biovolumètrique ou double technologie qui associe les deux technologies: infrarouge et hyperfréquence ou infrarouge et ultrasons, un capteur ou détecteur de bruits, un capteur ou détecteur de variation de gaz carbonique, un capteur ou détecteur de champ radio fréquence.
- les signaux en provenance des capteurs ou détecteurs sont traités et injectés dans une unité de traitement numérique, par exemple un microcontrôleur.
- le dispositif comporte un moyen de réglage de seuil de luminosité, en vue de permettre une comparaison dudit seuil de luminosité à un signal de luminosité fourni par un capteur.
- le dispositif détermine un temps de base de fonctionnement des moyens de chauffage.
- le dispositif est un dispositif programmable en fonction de la valeur de la luminosité et en fonction de la valeur d'un paramètre représentatif choisi par comparaison de plusieurs signaux de paramètres physiques.
- le dispositif fonctionne selon une logique séparée en deux : une logique de détection et une logique de chauffage
- le dispositif comporte une unité de traitement numérique avec deux sorties, dont l'une alimente un moyen indicateur de fonctionnement du mode économique, et dont l'autre est reliée à un moyen indicateur de fonctionnement du mode de confort.
- le dispositif comporte une unité de traitement numérique dont une sortie est reliée à un moyen indicateur d'un objectif de température à atteindre dans le local à chauffer.

L'invention sera mieux comprise grâce à la description qui va suivre donnée à titre d'exemple non limitatif en référence aux dessins annexés dans lesquels :
- la figure 1 représente schématiquement un organigramme de fonctionnement de dispositif selon l'invention.
- la figure 2 représente schématiquement un diagramme fonctionnel d'un dispositif de chauffage selon l'invention.
- la figure 3 représente schématiquement un exemple de circuit électronique pour la réalisation d'un dispositif selon l'invention.

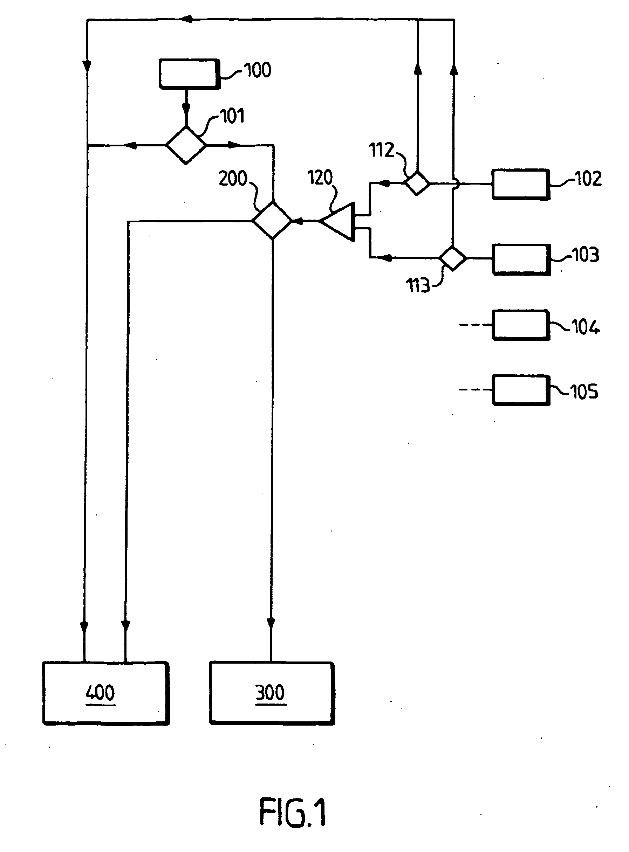

En référence à la figure 1, un organigramme de fonctionnement de dispositif selon l'invention débute par une étape 100 de détection de luminosité à l'intérieur du local.

A l'étape 101, la luminosité captée à l'étape 100 est comparée à un seuil prédéterminé. Si cette luminosité est inférieure au seuil prédéterminé, l'appareil de chauffage électrique est régulé à l'étape 400 en mode de chauffage économique.

Si cette luminosité est supérieure au seuil prédéterminé, l'algorithme se poursuit à l'étape 200. La logique d'hystérésis connue en soi est mise en oeuvre pour éviter les basculements intempestifs autour du seuil.

A l'étape 102, une détection de la variation de mouvement à l'intérieur du local est effectuée. Si aucun mouvement n'est détecté à l'intérieur du local, la régulation est orientée à l'étape 112 vers le mode de fonctionnement économique de l'étape 400. Si un mouvement est détecté à l'intérieur du local, l'algorithme se poursuit.

A l'étape 103, une détection de bruit dans le local est effectuée. Si aucun bruit n'est détecté dans le local, la régulation est orientée à l'étape 113 vers le mode de fonctionnement économique de l'étape 400. A l'étape 120, une vérification des niveaux de mouvement et de bruit est effectuée pour choisir le signal le plus distinct ou le plus cohérent, en vue de poursuivre l'algorithme à l'étape 200.

Bien entendu, on peut, sans sortir du cadre de l'invention, prévoir des étapes de détection d'autres paramètres physiques différents : par exemple, il est possible de détecter à une étape 104 la variation du taux de gaz carbonique dans l'atmosphère, ou à une étape 105 la détection de la variation du champ radio fréquence à l'intérieur du local. Les signaux de détection peuvent ensuite être traités de manière analogue sans sortir du cadre de la présente invention.

A l'étape 200, le signal représentatif choisi à l'étape 120 et le signal de luminosité comparé à l'étape 101 sont coordonnés, et leur simultanéité est vérifiée.

Si les deux signaux indiquent simultanément à l'étape 200 une présence dans le local, la régulation est orientée vers l'étape 300 de fonctionnement en mode de confort.

Si les deux signaux représentatifs de la luminosité et du paramètre physique choisi comme représentatifs à l'étape 120 n'indiquent pas simultanément une présence, la régulation est orientée à l'étape 200 vers le mode de fonctionnement économique de l'étape 400.

Il est bien entendu possible de prévoir une temporisation, ou d'intercaler des filtres temporels ou fréquentiels entre les diverses étapes de fonctionnement.

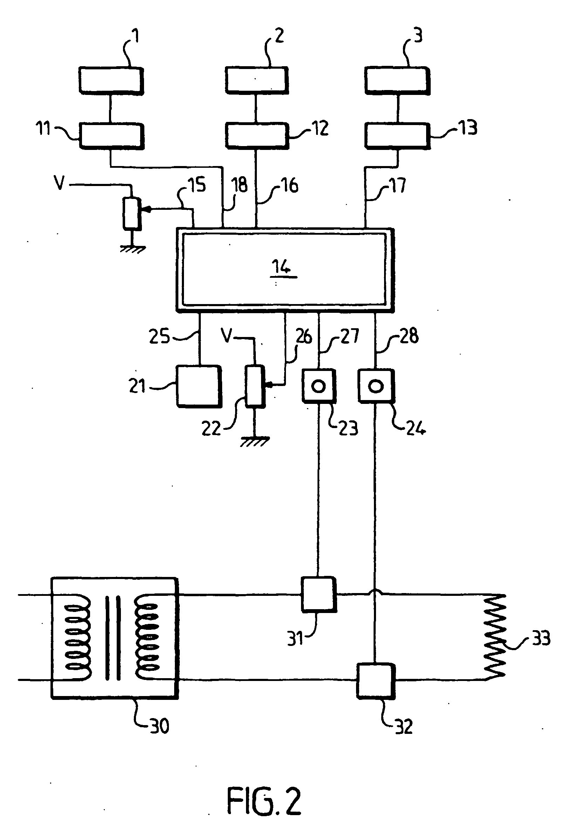

En référence à la figure 2, un diagramme fonctionnel de dispositif selon l'invention est représenté.

Le dispositif comporte un moyen 1 de détection de luminosité, par exemple une photo diode qui dispose d'un propre microcontrôleur 11, un moyen 2 de détection de mouvement, par exemple une photopile apte à détecter les variations de rayonnement infrarouge, et un moyen 3 de détection de bruit, par exemple un microphone à électret.

Chaque moyen de détection 2 ou 3 est relié à un circuit d'amplification ou de mise en forme du signal 12 ou 13. Les signaux mis en forme et éventuellement numérisés sont introduits dans un moyen de traitement programmé pour accomplir un algorithme de fonctionnement prédéterminé, similaire à l'algorithme décrit en référence à la figure 1.

Le moyen de traitement programmé pour accomplir un algorithme de fonctionnement prédéterminé est de préférence un moyen numérique

De préférence également, ce moyen de traitement numérique est un moyen 14 du genre microcontrôleur ou équivalent.

Le microcontrôleur 14 comporte notamment des entrées 15, 16, 17, 18 et des sorties 25, 26, 27, 28.

L'entrée 15 du microcontrôleur correspond au réglage du seuil de luminosité prédéterminé, auquel le signal de luminosité injecté par l'entrée 18 doit être comparé.

L'entrée 16 du microcontrôleur 14 correspond à un signal de mouvement représenté par une entrée toute ou rien.

L'entrée 17 du microcontrôleur correspond à un signal de bruit caractérisé par un niveau d'intensité permettant au microcontrôleur d'effectuer un choix entre un signal de bruit et un signal de mouvement.

La sortie 25 du microcontrôleur 14 correspond à un affichage d'objectif de température.

La sortie 26 du microcontrôleur correspond à un réglage de base de temps d'activité de chauffage.

La sortie 27 du microcontrôleur 14 provoque éventuellement l'affichage d'une diode électroluminescente 23, dans le cas où les moyens de chauffage en mode économique 31 sont activés.

La sortie 28 du microcontrôleur correspond à l'affichage d'une diode électroluminescente 24 dans le cas où les moyens de chauffage en mode de confort 32 sont activés.

Le circuit de chauffage comporte une partie 30 d'alimentation et de transformation, des moyens 31 de chauffage et de fonctionnement en mode économique, des moyens 32 de chauffage et de fonctionnement en mode de confort, et des moyens de chauffage 33 proprement dits.

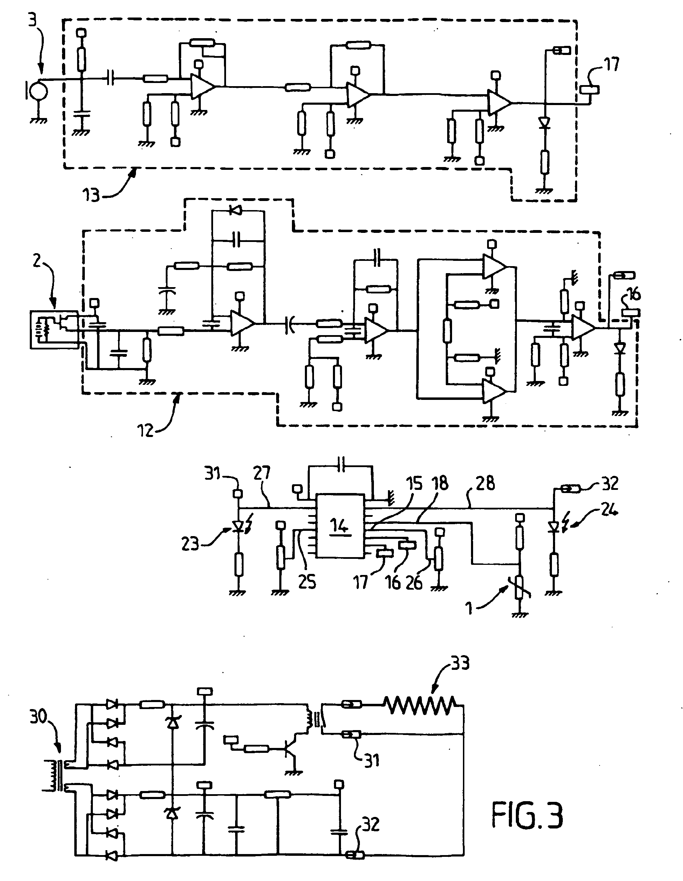

En référence à la figure 3, un circuit électronique de dispositif selon l'invention est représenté.

Les éléments représentés sont identiques ou fonctionnellement équivalents aux éléments représentés à la figure 2 et portent des chiffres de référence identiques.

Ainsi, la photo diode 1 peut détecter des luminosités de valeurs comprises entre 170 KiloLux et 0.20 Lux, entre une luminosité maximale correspondant au plein soleil et une luminosité minimale correspondant à la pleine nuit.

Le signal en provenance de la photopile 2 est tout d'abord amplifié par une succession 12 d'amplificateurs analogiques, avant d'être injecté sous forme de signal amplifié dans le microcontrôleur 14. Le signal provenant du microphone à électret 3 est également amplifié par une suite 13 d'amplificateurs analogiques, avant d'injecter le signal amplifié dans le microcontrôleur 14.

Le microcontrôleur 14 comporte deux sorties distinctes dont l'activation est indiquée par l'allumage d'une diode électroluminescente 23 ou 24.

Grâce au dispositif selon l'invention, la régulation de chauffage est automatiquement mise en mode de fonctionnement économique en l'absence effective de présence dans un local à chauffer.

L'invention décrite en référence à un mode de réalisation particulier n'y est nullement limitée, mais couvre au contraire toute modification de forme et toute variante de réalisation dans le cadre et l'esprit de l'invention.

Le dispositif selon l'invention peut être installé en option d'un boîtier manuel de commande à distance, activable à tout moment par l'utilisateur, au même titre que les modes de fonctionnement économique, mode de confort, mode de programmation, mode de fonctionnement hors gel, arrêt.

Le dispositif selon l'invention n'est actif que si l'utilisateur sélectionne ce mode sur son boîtier manuel de commande à distance.

Le dispositif selon l'invention installé en option d'un boîtier manuel de commande à distance n'est pas prioritaire sur les ordres de mode de fonctionnement hors gel, ou d'arrêt.

La détection de présence est permise par la juxtaposition d'au moins deux capteurs, dont la combinaison, selon la logique de détection décrite en référence à la figure 1, permet de savoir si la pièce est occupée.

De préférence, une lentille est utilisée pour élargir le champ de vision des capteurs de mouvement et de luminosité.

Le capteur de mouvement est avantageusement un capteur infrarouge passif, constitué de deux photopiles physiquement distinctes et aptes à détecter les variations de rayonnement infrarouge incident, de surface inférieure à un cm², et fonctionnant dans le spectre de détection correspondant au rayonnement infrarouge thermique (de 5 à 14µm de longueur d'onde).

Le capteur de luminosité est avantageusement une cellule photoconductrice dont la résistance varie en fonction de la luminosité reçue, de surface inférieure à un cm², et fonctionnant dans le spectre de détection correspondant au rayonnements visible, infrarouge proche, ultraviolet proche, de sensibilité proche de 0,2 Lux, et associé à un guide de lumière qui permet de capter et d'envoyer la lumière vers le capteur de luminosité.

Afin de détecter au mieux les personnes présentes dans la pièce, on élargit avantageusement le champ de vision des capteurs, sans toutefois détecter les corps faisant moins de 60 cm de haut.

La logique de fonctionnement d'un système de chauffage électrique peut avantageusement être séparée en deux logiques : une logique de détection et une logique de chauffage.

La logique de détection de présence humaine associe, aux signaux des différents capteurs, un message : « présence » ou « absence ».

La logique de chauffage adapte le mode de chauffage (typiquement mode de fonctionnement économique, mode de confort), d'une part, au message reçu : « présence » ou « absence », et d'autre part, au système de programmation et au temps écoulé depuis la dernière détection de présence.

Dans la logique de détection, la détection de présence se fait grâce au capteur de luminosité dont le seuil est fixé entre 0.2 et 0.8 lux et au capteur infrarouge passif de mouvement.

Il faut que les deux conditions de luminosité et de mouvement soient réunies pour que l'utilisateur soit détecté et pour que l'appareil chauffe en mode de confort.

La logique de chauffage adapte la température de consigne en fonction du résultat de la détection (présence ou absence), de la plage de programmation (mode de fonctionnement économique, mode de confort), de la température de consigne de l'état précédent (Confort, Confort-1, Confort-2 ou Eco) et du temps écoulé depuis la dernière détection, depuis le début de la plage programmée en mode de confort.

Une logique de chauffage préférée est commandée par l'automate suivant :

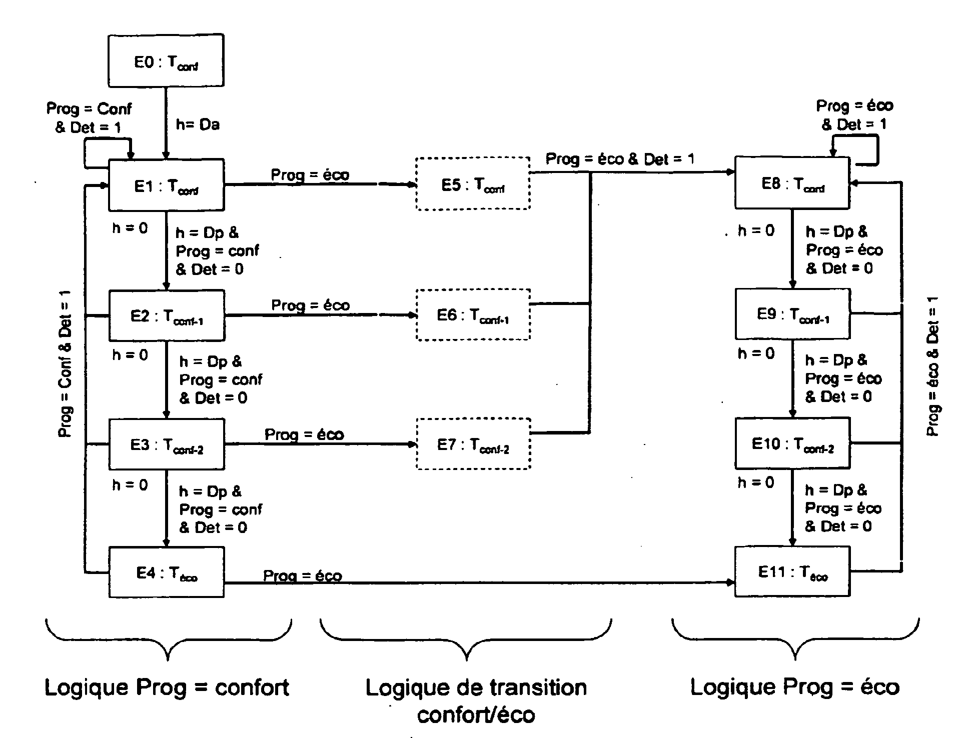

Ce schéma logique de chauffage correspond aux étapes suivantes :

Si l'on part de l'état E0, la température est en confort de la programmation. L'appareil chauffe en confort pendant la durée d'anticipation Da pour préchauffer la pièce. Une fois ce temps écoulé, on passe en E1.

Si quelqu'un est détecté, on reste en confort. Si personne n'est détecté pendant un intervalle de temps ou durée de palier Dp, la transition progressive démarre : on passe en confort-1 (état E2) et l'horloge est remise à 0.

Depuis l'état E2, de la même façon, on passe en confort-2 (état E3, horloge remise à 0) au bout d'un temps ou durée de palier Dp si personne n'est détecté etc... jusqu'à arriver en température éco (E4).

Bien sûr, si lors de cette phase descendante, quelqu'un est détecté, on repasse immédiatement en température de Confort (état E1).

D'autre part, si lors de cette phase descendante, l'ordre renvoyé par la programmation devient « Eco » (cas qui ne se produit que dans le choix d'une saisie classique), la transition progressive est court-circuitée et abrégée : on attend que le palier courant soit terminé (ie, on attend que l'horloge ait atteint la valeur de durée de palier Dp) puis on passe directement en Eco, comme l'indique le schéma suivant. Il s'agit des états intermédiaires E5, E6, et E7 du milieu.

Si maintenant, l'on considère que l'on se situe dans une plage programmée en « Eco » : Si quelqu'un est détecté, la température de commande passe immédiatement en Confort (état E8). De la même façon que précédemment, si quelqu'un est détecté, on reste en confort. Si personne n'est détecté pendant un intervalle de temps ou durée de palier Dp, la transition progressive démarre comme précédemment : on passe en confort-1 (état E9) et l'horloge est remise à 0, puis en confort-2...

Enfin, à tout moment, l'ordre renvoyé par la programmation peut devenir « Confort ». On revient alors à l'état E0.

## Revendications

1. Dispositif de chauffage de locaux tenant compte de la présence effective de personnes à l'intérieur des locaux pour adapter le mode de chauffage électrique, comportant au moins deux capteurs ou détecteurs de paramètres physiques, en vue de détecter, par coordination des signaux des au moins deux détecteurs (1-3) ou capteurs de paramètres physiques, la présence effective d'une personne à l'intérieur d'un local à chauffer, pour adapter le mode de chauffage électrique, par exemple au mode de confort ou au mode économique, **caractérisé par le fait que** les capteurs ou détecteurs (1-3) de paramètres physiques comportent au moins une combinaison d'un capteur ou détecteur de variation de mouvement et d'un capteur ou détecteur de luminosité, et **par le fait que** le dispositif fonctionne selon une logique séparée en deux :
une logique de détection de présence humaine associant, aux signaux des différents capteurs, un message de "présence" ou "absence".
et une logique de chauffage adaptant le mode de chauffage, comme par example mode de fonctionnement économique ou mode de confort, d'une part, au message de "présence" ou "absence" reçu par la logique de détection, et d'autre part, au système de programmation et au temps écoulé depuis la dernière détection de présence.

2. Dispositif de chauffage de locaux selon la revendication 1, **caractérisé par le fait que** les capteurs ou détecteurs (1-3) de paramètres physiques comportent en outre au moins un capteur ou détecteur choisi dans l'ensemble comportant :
- un capteur ou détecteur de présence absolue à balayage laser;
- un capteur ou détecteur de présence absolue à matrice infrarouge,
- un capteur à hyperfréquence qui permet de déceler le déplacement d'un objet dans sa zone de surveillance,
- un capteur ou détecteur à ultrasons,
- un capteur ou détecteur périvolumétrique qui détecte le changement de pression,
- un capteur ou détecteur biovolumètrique ou double technologie qui associe les deux technologies: infrarouge et hyperfréquence ou infrarouge et ultrasons,
- un capteur ou détecteur de bruit,
- un capteur ou détecteur de variation de gaz carbonique,
- un capteur ou détecteur de champ radio fréquence.

3. Dispositif selon la revendication 1 ou la revendication 2, **caractérisé par le fait que** les signaux en provenance des capteurs (1-3) ou détecteurs sont traités et injectés dans une unité de traitement numérique, par exemple un microcontrôleur (14) ; et **par le fait que** le dispositif comporte un moyen de réglage de seuil de luminosité, en vue de permettre une comparaison dudit seuil de luminosité à un signal de luminosité fourni par un capteur (1).

4. Dispositif de chauffage selon l'une quelconque des revendications précédentes, **caractérisé par le fait que** le dispositif détermine un temps de base de fonctionnement de moyens (30-33) de chauffage du dispositif.

5. Dispositif de chauffage selon la revendication 1 ou la revendication 2, **caractérisé par le fait que** le dispositif est un dispositif programmable en fonction de la valeur de la luminosité et en fonction de la valeur d'un paramètre représentatif choisi par comparaison de plusieurs signaux de paramètres physiques.

6. Dispositif selon l'une quelconque des revendications précédentes, **caractérisé par le fait que** le dispositif comporte une unité de traitement numérique avec deux sorties, dont l'une (27) alimente un moyen (23) indicateur de fonctionnement du mode économique, et dont l'autre (28) est reliée à un moyen (24) indicateur de fonctionnement du mode de confort.

7. Dispositif selon l'une quelconque des revendications précédentes, **caractérisé par le fait que** le dispositif comporte une unité de traitement numérique dont une sortie (25) est reliée à un moyen indicateur (21) d'un objectif de température à atteindre dans le local à chauffer.

## Claims

1. A device for heating a site taking into account the effective presence of persons on the site to adapt the electrical heating mode, including at least two sensors or detectors of physical parameters, in order to detect, by coordination of signals from at least two detectors (1-3) or sensors of physical parameters, the effective presence of a person inside a site to be heated, to adapt the electrical heating mode, for example to the comfort mode or the economy mode, **characterized in that** the sensors or detectors (1-3) of physical parameters include at least one combination of a movement variation sensor or detector and a luminosity sensor or detector, and **in that** the device operates according to a two-part logic:
a logic for detecting a human presence associating a "presence" or "absence" message with the signals from the various sensors,
and a heating logic adapting the heating mode, such as, for example, economy or comfort operating mode, on one hand, to the "presence" or "absence" message received by the detection logic and, on the other hand, to the programming system and the time elapsed since the last presence detection.

2. The device for heating a site according to claim 1, **characterized in that** the sensors or detectors (1-3) of physical parameters also include at least one sensor or detector chosen from the group including:
- an absolute presence sensor or detector with laser scanning,
- an absolute presence sensor or detector with infrared matrix,
- a hyperfrequency sensor that makes it possible to detect the movement of an object in its surveillance area,
- an ultrasound sensor or detector,
- a perivolumetric sensor or detector that detects pressure changes,
- a biovolumetric sensor or detector or a dual technology sensor or detector that combines two technologies: infrared and hyperfrequency, or infrared and ultrasound,
- a noise sensor or detector,
- a carbon dioxide variation sensor or detector,
- a radiofrequency field sensor or detector.

3. The device according to claim 1 or claim 2, **characterized in that** the signals coming from the sensors (1-3) or detectors are processed and injected into a digital processing unit, for example a microcontroller (14); and **in that** the device includes a means for adjusting the luminosity threshold, in order to allow a comparison of said luminosity threshold with a luminosity signal provided by a sensor (1).

4. The device according to any one of the preceding claims, **characterized in that** the device determines a basic operating time for the heating means (30-33) of the device.

5. The heating device according to claim 1 or claim 2, **characterized in that** the device can be programmed depending on the luminosity value and depending on the value of a representative parameter chosen in comparison to several physical parameter signals.

6. The device according to any one of the preceding claims, **characterized in that** the device includes a digital processing unit with two outputs, one of which (27) supplies a means (23) indicating the operation of the economy mode, and the other of which (28) is connected to a means (24) indicating the operation of the comfort mode.

7. The device according to any one of the preceding claims, **characterized in that** the device includes a digital processing unit whereof one output (25) is connected to an indicator means (21) of a goal temperature to be reached in the site to be heated.

## Patentansprüche

1. Heizvorrichtung für Räumlichkeiten, die die tatsächliche Anwesenheit von Personen in den Räumlichkeiten berücksichtigt, um den elektrischen Heizmodus anzupassen, die mindestens zwei Sensoren oder Detektoren physikalischer Parameter umfasst, um durch Abstimmung der Signale der mindestens zwei Detektoren (1-3) oder Sensoren physikalischer Parameter die tatsächliche Anwesenheit einer Person in einem zu beheizenden Raum festzustellen, um den elektrischen Heizmodus anzupassen, zum Beispiel an den Komfortmodus oder den Economy-Modus, **dadurch gekennzeichnet, dass** die Sensoren oder Detektoren (1-3) physikalischer Parameter mindestens eine Kombination eines Sensors oder Detektors der Bewegungsänderung und eines Sensors oder Detektors der Lichtstärke umfassen, und **dadurch**, dass die Vorrichtung gemäß einer zweigeteilten Logik arbeitet:
einer Logik zur Erfassung der Anwesenheit von Menschen, die den Signalen der verschiedenen Sensoren eine Anwesenheits- oder Abwesenheitsnachricht zuordnet,
und einer Heizlogik, die den Heizmodus, wie zum Beispiel Komfortmodus oder Economy-Modus, einerseits an die "Anwesenheits"- oder "Abwesenheits"-Nachricht anpasst, die von der Erfassungslogik empfangen wurde, und andererseits an das Programmiersystem und an die Zeit, die seit der letzten Anwesenheitserfassung vergangen ist.

2. Heizvorrichtung für Räumlichkeiten nach Anspruch 1, **dadurch gekennzeichnet, dass** die Sensoren oder Detektoren (1-3) physikalischer Parameter weiterhin einen Sensor oder Detektor umfassen, der aus der Gruppe ausgewählt ist, die umfasst:
- einen Sensor oder Detektor absoluter Anwesenheit mit Laserabtastung,
- einen Sensor oder Detektor absoluter Anwesenheit mit Infrarotmatrix,
- einen Ultrahochfrequenzsensor, der es erlaubt, die Ortsveränderung eines Objekts in seinem Überwachungsbereich festzustellen,
- einen Ultraschallsensor oder -detektor,
- einen perivolumetrischen Sensor oder Detektor, der die Druckveränderung feststellt,
- einen biovolumetrischen oder Doppel-Technologie-Sensor oder - Detektor, der zwei Technologien - Infrarot und Ultrahochfrequenz oder Infrarot und Ultraschall - kombiniert,
- einen Geräuschsensor oder -detektor,
- einen Sensor oder Detektor, der die Kohlendioxidschwankung feststellt,
- einen Funkfrequenzfeldsensor oder -detektor.

3. Vorrichtung nach Anspruch 1 oder Anspruch 2, **dadurch gekennzeichnet, dass** die von den Sensoren (1-3) oder Detektoren kommenden Signale verarbeitet und in eine digitale Verarbeitungseinheit eingespeist werden, zum Beispiel in einen Mikrosteuerbaustein (14); und **dadurch**, dass die Vorrichtung ein Mittel zum Einstellen der Schwelle der Lichtintensität umfasst, um einen Vergleich der Schwelle der Lichtintensität mit einem von einem Sensor (1) gelieferten Lichtintensitätssignal zu erlauben.

4. Heizvorrichtung nach einem der vorangehenden Ansprüche, **dadurch gekennzeichnet, dass** die Vorrichtung eine Basiszeit der Funktion von Heizmitteln (30-33) der Vorrichtung bestimmt.

5. Heizvorrichtung nach Anspruch 1 oder Anspruch 2, **dadurch gekennzeichnet, dass** die Vorrichtung eine Vorrichtung ist, die in Abhängigkeit vom Wert der Lichtintensität und in Abhängigkeit vom Wert eines repräsentativen Parameters programmierbar ist, der durch Vergleich mehrerer Signale physikalischer Parameter ausgewählt ist.

6. Vorrichtung nach einem der vorangehenden Ansprüche, **dadurch gekennzeichnet, dass** die Vorrichtung eine digitale Verarbeitungseinheit mit zwei Ausgängen umfasst, von denen ein Ausgang (27) ein Mittel (23) zur Anzeige der Funktion des Economy-Modus versorgt und von denen der andere (28) mit einem Mittel (24) zur Anzeige der Funktion des Komfortmodus verbunden ist.

7. Vorrichtung nach einem der vorangehenden Ansprüche, **dadurch gekennzeichnet, dass** die Vorrichtung eine digitale Verarbeitungseinheit umfasst, von der ein Ausgang (25) mit einem Mittel zur Anzeige (21) eines Temperaturziels verbunden ist, das in dem zu beheizenden Raum erreicht werden soll.
